# EUROPEAN PATENT SPECIFICATION

(11) **EP 1 203 708 B1**
(45) Date of publication and mention of the grant of the patent: **19.03.2003**
(21) Application number: 99931262.2
(22) Date of filing: 20.07.1999
(51) Int. Cl.: B62D 1/24

(54) **SERVOSTEERING WITH MANUAL AND AUTOMATIC FUNCTION**
SERVOLENKUNG MIT MANUELLER UND AUTOMATISCHER FUNKTION
SERVODIRECTION AVEC FONCTION MANUELLE ET AUTOMATIQUE

(43) Date of publication of application: 08.05.2002
(73) Proprietor: TRW Automotive Espana, S.A., 31012 Pamplona (ES)
(72) Inventor: REDIN MIQUELEIZ, Juan, E-31012 Pamplona (ES)
(74) Representative: Carpintero Lopez, Francisco
(86) International application number: ES9900231
(87) International publication number: WO01005643

(56) References cited:
- GB-A- 1 601 271
- GB-A- 2 158 022
- US-A- 5 517 899
- PATENT ABSTRACTS OF JAPAN vol. 012, no. 352 (M-744), 21 Septiembre 1988 (1988-09-21) & JP 63 110098 A (KAYABA IND CO LTD), 14 Mayo 1988 (1988-05-14)
- PATENT ABSTRACTS OF JAPAN vol. 011, no. 228 (M-610), 24 Julio 1987 (1987-07-24) & JP 62 043361 A (NISSAN MOTOR CO LTD), 25 Febrero 1987 (1987-02-25)

## Description

### SPECIFICATION

### OBJECT OF THE INVENTION

The invention relates to a power steering capable of working manually or automatically without distinction, based upon a new way of hydraulically supplying the chamber where the respective rocker arm or cog sector pivots, linked through any suitable conventional means to the respective wheels in order for the latter to turn in either direction, depending on the direction in which said rocker arm turns, driven by the movement of a rack piston located within a cylinder or chamber directly communicating with the previous chamber.

The object of the invention is to provide a power steering applicable in motor cars and specifically and particularly in transport vehicles such as buses or the like, wherein said power steering is constituted in such a way that the vehicle may be steered manually with the driver acting on the steering-wheel, or automatically without the driver being involved.

### BACKGROUND OF THE INVENTION

A standard power steering is known to be based on moving by hydraulically pushing a rack piston mounted within a cylinder or chamber, wherein a subchamber is established communicated with first chamber, a rocker arm existing therein with a cog sector meshing with the piston rack, thereby for movement of the piston in either direction to carry with it a pivoting of the rocker arm in the relevant direction and hence steering in one direction or another (to the right or to the left) of the respective vehicle front wheels, which are logically linked through any suitable system to said rocker arm.

The rack piston is also known to slide on a ball screw turned by means of a turning rod linked through one of its ends to said endless screw and through the other to the respective shaft associated to the steering-wheel of the vehicle at issue, the foregoing all combined with a pilot valve allowing a liquid to be applied to the chamber or cylinder in which the rack piston is located, in order to have the piston move in either direction, for it is manually almost impossible to move such piston by turning the screw, as a result of the lock exerted thereon by the cog sector of the rocker arm. That is why it is necessary to use a pilot valve with which a hydraulic fluid may be applied to the cylinder in order that, due to the lag between the turning of the turning rod and the screw, when the vehicle steering-wheel is turned, the fluid enters, depending on the direction of rotation, through the valve at either end of the chamber or cylinder and hence the rack piston is moved in either direction.

### DESCRIPTION OF THE INVENTION

The power steering disclosed herein is based upon the structure of a standard power steering as defined in the preceding section, and provides a number of innovations allowing the power steering proper to work manually, as is conventionally the case, i.e. with the driver acting on the steering-wheel, or automatically, or in other words without the involvement of the driver, in which case the vehicle wheels will move controlled by an electronic system.

It has to that end been devised that based upon a conventional power steering, indirect external paths are included through which the hydraulic fluid may, by means of appropriate valves and connections, move directly into and out of the cylinder in which the rack piston may move, or else directly into and out of the rocker arm chamber, the foregoing all in such a way that both the hydraulic fluid inlet and outlet ducts are in this case double, connecting the appropriate pilot valve with the chambers in the manual operation and establishing a direct communication of the hydraulic fluid on the actual chambers through the appropriate control system, without the involvement of the pilot valve, for automatic operation.

Consequently, the invention is based upon the chambers being supplied indirectly in the manual operation, through the appropriate valves and ancillary connections connecting said chambers and the pilot valve, or else that connection between the pilot valve and the chambers is automatically cut off, in which case the hydraulic fluid is supplied to the chambers directly, whereupon the system will work as a simple hydraulic cylinder.

More specifically, in addition to conventional power steering parts and components, the inventive power steering includes a ring provided at the rear end of the endless screw associated to the turning rod, which ring is provided with a radial branch allowing, through bores provided in the body of the casing or constituting the cylinder as such, the hydraulic fluid to flow from the pilot valve to an outer duct leading, through a connection and after passing through a selector valve, into the rocker arm chamber, being particular in that said connection in turn receives a second duct allowing the hydraulic fluid to be directly injected or drawn through the same into and out of said chamber, without passing through the pilot valve.

A second outer double duct has been provided communicating on the one hand the pilot valve and the cylinder housing the rack piston, and on the other hand allowing, by means of a duct and assisted by an appropriate control system, oil to be directly injected into or drawn out of the cylinder without passing through the pilot valve.

Now, it follows obviously from the above that the switchover from manual to automatic mode and opening and shutting of the valves will be governed by a control system which is capable, through the appropriate sensors, of discerning when the vehicle is being driven in manual mode, i.e. with the driver acting on the steering-wheel, or when said vehicle is being driven automatically, in which case the vehicle will work as a track-guided vehicle, i.e. the vehicle will automatically follow a path marked on the ground, without human involvement being required.

### DESCRIPTION OF THE DRAWINGS

In order to provide a fuller description and contribute to an easier understanding of the characteristics of the invention, in accordance with a preferred practical embodiment thereof, a set of drawings is attached to the present specification as an integral part thereof which, while purely illustrative and not fully comprehensive, shows the following:
Figure 1.- Is a schematic longitudinal section view of the power steering subject of the invention, in the manual mode working position, with the steering-wheel turned right.

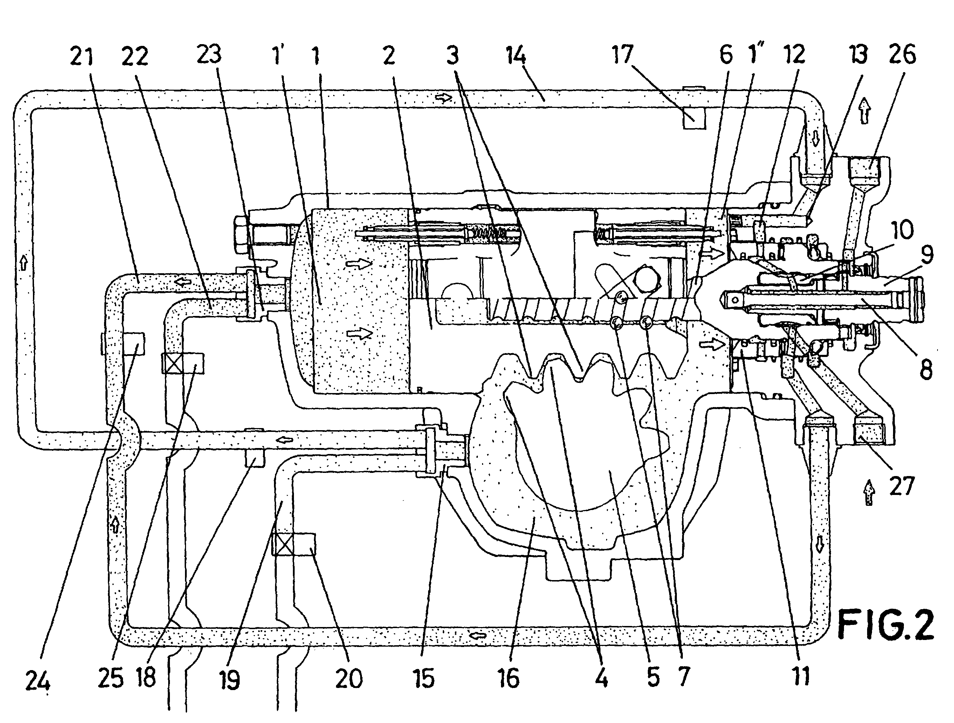

Figure 2.- Is a view analogous to that of the preceding figure, in this case again in the manual mode working position albeit with the steering-wheel turned left.

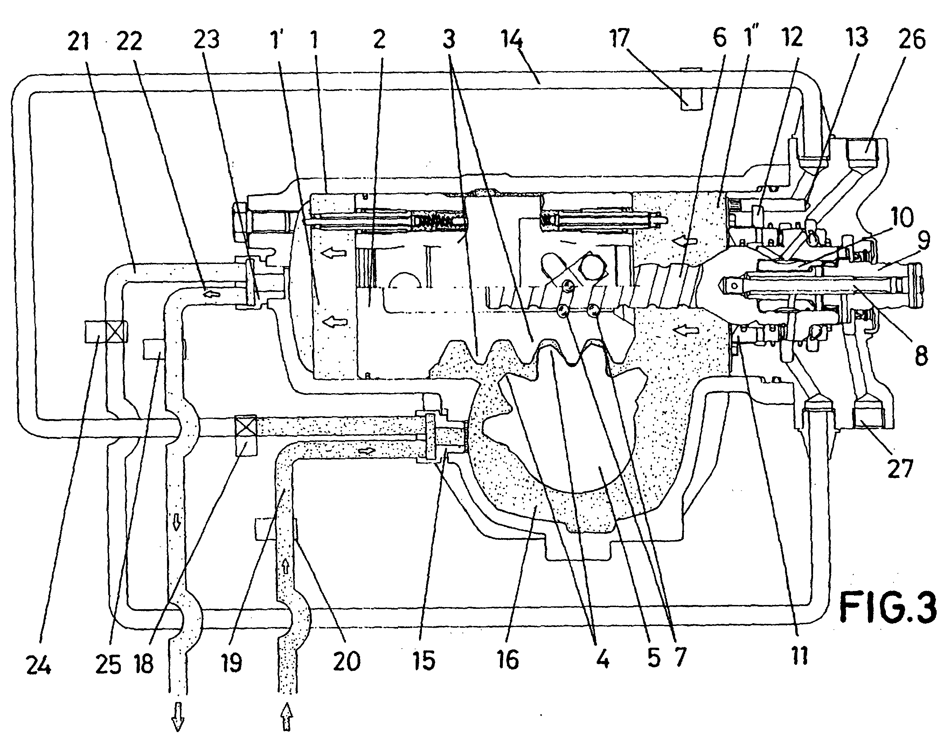

Figure 3.- Is another view of the same power steering shown in the preceding figures, albeit in this case in the automatic mode working position with the steering-wheel turned right

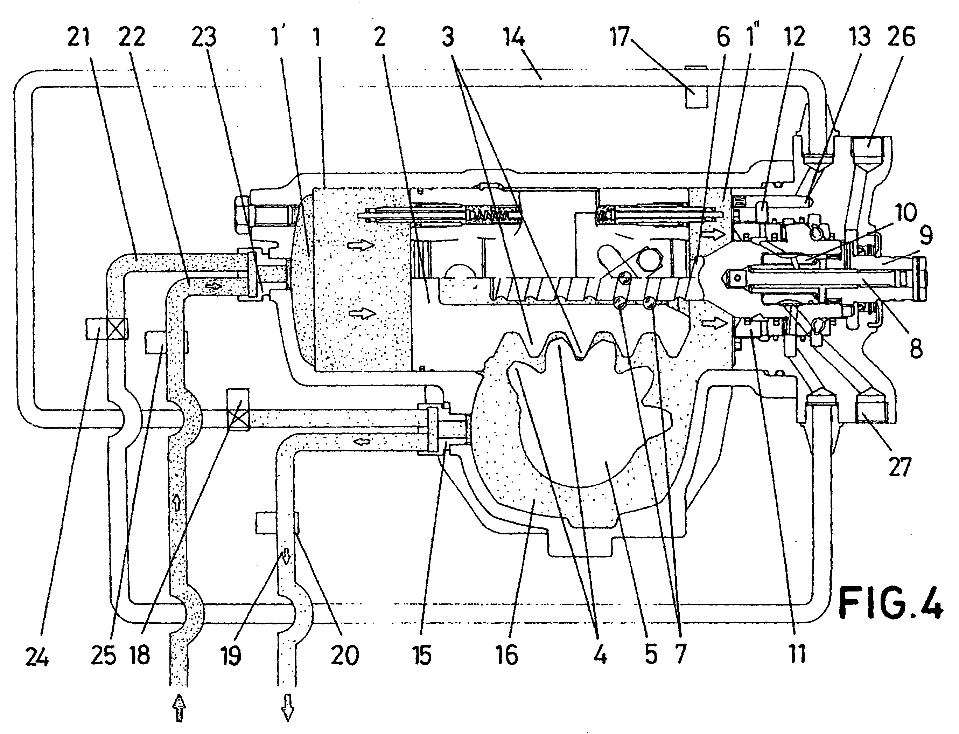

Figure 4.- Finally shows a view analogous to that of the preceding figure, again in the automatic mode working position, albeit with the steering-wheel turned left.

### PREFERRED EMBODIMENT OF THE INVENTION

With reference to the above figures, the power steering of the invention comprises, as is conventionally the case, a cylinder (1) in which a rack (3) piston (2) may move axially, meshing with the cog sector (4) of a rocker arm (5) linked to the appropriate front wheel axle of a vehicle, being particular in that the rack (3) piston (2) is associated to a screw (6) with balls (7) inserted between them, the screw (6) being linked to a turning rod (8) solidly attached to a shaft (9) linked to the respective vehicle steering-wheel, moreover comprising a pilot valve (10) through which a hydraulic fluid (oil) is applied into the chamber defined by the cylinder (1) in order to have the piston (2) move in either direction and hence the rocker arm (5) pivot in the relevant direction, thereby for the vehicle front wheels to be turned right or left. There are logically two chambers in the cylinder (1), namely a front chamber (1') and a rear chamber (1"), and thus depending on whether the hydraulic fluid or oil is applied through said rear part or else through said front part, then said piston (2) will move in one direction or another.

Now, then, based upon these characteristics, the novelty of the invention lies in that a ring (11) is provided at the rear end of the screw (6), having a side branch (12) allowing, through a number of bores (13) provided in the body of the casing or cylinder (1) as such, the hydraulic fluid or oil to flow from the pilot valve (10) to an outer duct (14) which leads up to a connection (15) communicated with the chamber (16), the latter being a subchamber of the chamber established by the cylinder (1), the rocker arm (5) being established in that chamber (16). This outer duct (14) has a pair of selector valves (17) and (18) and another outer duct (19) with a selector valve (20) in turn serves the connection (15), which latter duct communicates directly with a hydraulic fluid supply tank.

Either duct (14) and (19) are duly controlled by the appropriate control system and allow the hydraulic fluid or oil to be both injected into and drawn out of the chamber (16).

Another novel characteristic provided by the power steering of the invention is the provision of another pair of outer ducts (21) and (22) serving a common connection (23) directly communicated with the front part or chamber (1') of the cylinder (1), these outer ducts (21) and (22) having respective selector valves (24) and (25), being particular in that the duct (21) is communicated with the actual pilot valve (10), whereas the duct (22) is communicated with the hydraulic fluid or oil supply tank.

The subject system or power steering logically includes the inlet (26) and outlet (27) ducts which may act as an inlet and outlet without distinction, as shall be explained hereinafter.

Based upon this construction, the four variants of the power steering work as follows:

### Manual mode turning the vehicle steering-wheel right:

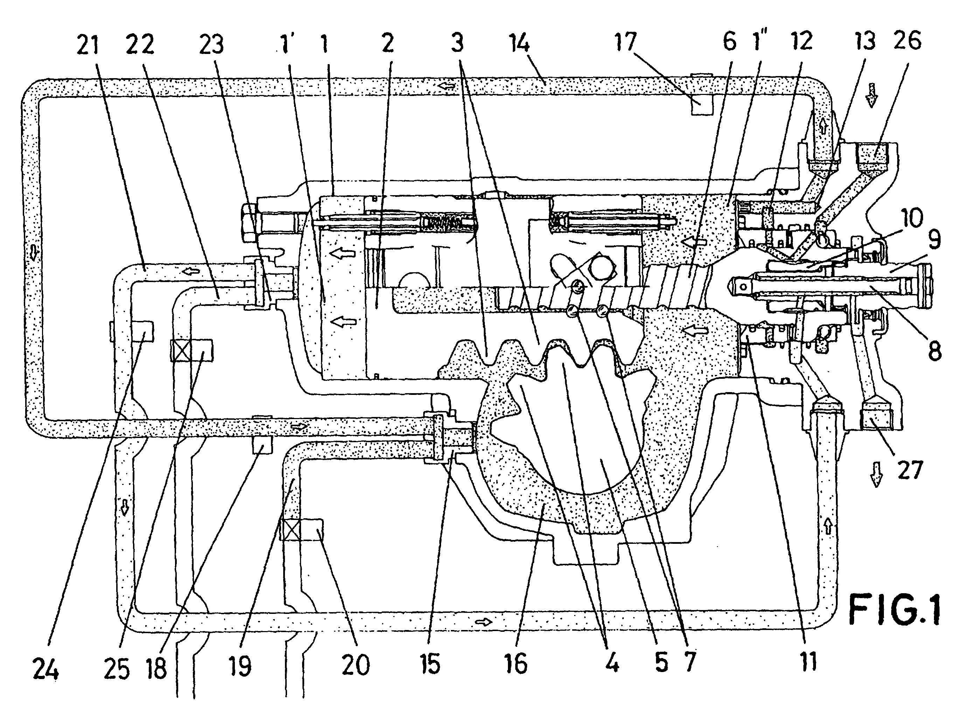

In this situation, turning of the steering-wheel communicates the inlet duct (26) and the ring (11) through the pilot valve (10), whereupon pressurised oil will pass to the outer duct (14), the chamber (16) housing the rocker arm (5) being supplied directly through connection (15), the rack (3) piston (2) being pushed to the left, as shown in figure 1, causing said rocker arm (5) to pivot and consequently the vehicle wheels to turn. Moving the rack (3) piston (2) to the left causes the oil (hydraulic fluid) contained within the cylinder (1) and specifically the front chamber (1') to return through the duct (21) to the pilot valve (10), causing it to be recycled to the outlet duct (27). In that working position, the selector valves (20) and (25) are shut, thereby invalidating the automatic working mode.

### Manual mode turning the vehicle steering-wheel left:

In this situation, turning the steering-wheel causes the pilot valve (10) to communicate the duct (27), previously used as an outlet return and now as an inlet for hydraulic fluid, with the outer duct (21), causing the oil to enter the cylinder (1) directly, specifically the front chamber (1'), pushing the rack (3) piston (2) to the right and thereby dragging the rocker arm, consequently causing the wheels to turn. Turning the rack (3) piston (2) to the right causes the oil contained in the chamber (1") of the cylinder (1) to return through the duct (14) to the pilot valve (10), and from there to the outlet duct (26) which was previously used as an inlet duct.

### Automatic mode turning the vehicle steering-wheel right:

In this case, the control system with which the power steering must be provided will shut the valves (18) and (24), preventing communication between the pilot valve (10) and the chambers (1') and (16), in such a way that the wheels will not move by acting on the steering-wheel, but rather controlled by the appropriate control system, pressurised oil being entering through the duct (19) directly into the chamber (16) of the rocker arm (5), causing the rack (3) piston (2) and consequently the rocker arm (5) and the vehicle wheels to move to the left. This movement of the rack (3) piston (2) to the left causes return oil to be evacuated through the duct (22) without passing through the pilot valve (10). In this case, the power steering works as if it were a hydraulic cylinder with its plunger (piston) moving from one side to another depending on the end at which the oil pressure is applied.

### Automatic mode turning the vehicle steering-wheel left:

As in the preceding case, the valves (18) and (24) are kept shut and hence the passage through the ducts (14) and (21) is shut, or in other words communication between the chambers and the pilot valve (10) is cut off, the valves (20) and (25) being opened, allowing oil to be discharged directly onto the chambers (16) and (1'), pressurised oil now entering through the duct (22) directly into the chamber (1') of the cylinder ( I ), pushing the rack (3) piston (2) to the right and causing the rocker arm (5) and consequently the vehicle wheels to turn. Oil will simultaneously return through the duct (19).

It shall have been inferred from the foregoing disclosure that both the oil supply and return ducts (26) and (27) in manual mode, and the direct supply and return ducts (19) and (22) in automatic mode are communicated with a single oil tank that has not been shown in the drawings in order to avoid complicating such drawings.

## Claims

1. Power steering working manually and automatically, which comprises a cylinder (1) in which a rack (3) piston (2) move axially, defining two chambers (1') and (1"), which piston is linked to a screw (6) to which a turning rod (8) is fixed coupled to the respective shaft (9) driven by the vehicle steering-wheel, and further comprising a pilot valve (10) through which a hydraulic fluid (oil) is injected or returns to the chamber defined by the cylinder (1), or the chamber housing the rocker arm (5), which includes a cog sector (4) meshing with the piston (2) rack (3), in order for movement of the piston to have the rocker arm (5) pivot and consequently the vehicle wheels turn, **characterised in that** the rear end of the screw (6) is provided with a ring (11) having a radial branch (12) allowing, through some bores (13) established in the body of the cylinder (1), oil to pass through an outer duct (14) from the pilot valve (10) to the chamber (16) of the rocker arm (5), the chambers (1'-1") and the chamber (16) of the rocker arm (5) being supplied indirectly and externally respectively through connections (23) and (15) directly communicated with the very chamber (1') of the cylinder (1) and the chamber (16), which connections (23) and (15) are served by said duct (14) and a duct (21) linked to the pilot valve (10) and the ducts (22) and (19) communicating directly with the oil tank, the foregoing all such that oil is applied through ducts (14) or (21) after first passing through the pilot valve (10), allowing the vehicle to be steered in manual mode upon the driver acting on the vehicle steering-wheel, whereas oil is applied through ducts (19) or (22) without passing through the pilot valve (10), establishing automatic operation without the driver being involved, by controlling such application of oil through an appropriate control system.

2. Power steering working manually and automatically, as in claim 1, **characterised in that** the outer ducts (14), (19), (21) and (22) are provided with the same number of selector valves (18), (20), (24), and (25) which are controlled by the respective control system and open or close the passage through the relevant ducts to allow manual mode operation, with the oil supplied to the chambers first passing through the pilot valve (10), or automatic mode operation with the oil passing into the chambers directly without passing through the pilot valve (10).

3. Power steering working manually and automatically, as in preceding claims, **characterised in that** depending on whether operation is in manual or automatic mode, the relevant outer ducts act as ducts for injection into the respective chambers or oil return ducts from the respective chambers.

## Patentansprüche

1. Motorunterstütztes Lenksystem mit manueller oder automatischer Funktionsweise, das einen Zylinder (1) aufweist, in dem sich ein Kolben (2) mit Zahnstange (3) axial bewegt, der zwei Kammern (1') und (1'') bestimmt, ein Kolben, der mit einer Schraube (6) verbunden ist, an welche eine Drehstange (8) an der Achswelle (9) fixiert ist, die vom Lenkrad des Fahrzeugs entsprechend gesteuert wird und der ausserdem, ein Vorsteuerventil (10) aufweist, über das eine hydraulische Flüssigkeit (Öl) eingespritzt wird oder in die vom Zylinder (1) definierte Kammer zurückläuft, oder in die Kammer, wo der Kipphebel (5) angeordnet ist, die einen gezahnten Abschnitt (4) aufweist, der in die Zahnstange (3) des Kolbens (2) eingreift, um den Kolben und dieser wiederum den Zapfen des Hebels (5) und folglich die Räder des Fahrzeuges zu bewegen, **dadurch gekennzeichnet, dass** das hintere Ende der Schraube (6) mit einem Ring (11) mit einer radialen Abzweigung (12) versehen ist, der über einige im Körper des Zylinders (1) ausgeführte Bohrungen (13) das Durchfliessen des Öls über eine externe Leitung (14) vom Vorsteuerventil (10) aus in die Kammer (16) des Kipphebels (5) ermöglicht, wobei die Kammer (1'-1'') und die Kammer (16) jeweils indirekt und von aussen vom Kipphebel (5) über Anschlüsse (23) und (15) versorgt werden, die mit derselben Kammer (1') des Zylinders und der Kammer (16) direkt in Verbindung stehen, deren Anschlüsse (23) und (15) von der erwähnten Leitung (14) und einer Leitung (21) versorgt werden, die mit dem Vorsteuerventil (10) und den Leitungen (22) und (19) verbunden ist, die mit dem Ölbehälter in direkter Verbindung stehen, verwenden das gesamte vorherige Öl über die Leitungen (14) oder (21), nachdem es zuerst durch das Vorsteuerventil (10) geflossen ist und erlaubt eine Kontrolle der Lenkung des Fahrzeuges im manuellen Modus beim Lenkvorgang des Fahrzeuges durch den Fahrer, solange Öl über die Leitungen (19) oder (22) eingesetzt wird ohne über das Vorsteuerventil (10) zu fliessen, und legt die automatische Funktionsweise ohne das Einschreiten des Fahreres durch die Kontrolle eines derartigen Öleinsatzes über ein geeignetes Kontrollsystem fest.

2. Motorunterstütztes Lenksystem mit manueller oder automatischer Funktionsweise wie im Anspruch 1, **dadurch gekennzeichnet, dass** die äusseren Leitungen (14), (19), (21) und (22) mit der gleichen Ventilanzahl des Selektors (18), (20), (24) und (25) versehen sind, die von dem entsprechenden Kontrollsystem gesteuert werden und den Durchfluss über die entsprechenden Leitungen öffnen oder sperren, um die Funktionsweise des manuellen Modus mit dem Öl zu ermöglichen, das bei der ersten Versorgung über das Vorsteuerventil (10) in die Kammern fliesst oder den automatischen Funktionsmodus, wo das Öl direkt in die Kammern fliesst ohne das Vorsteuerventil (10) zu passieren.

3. Motorunterstütztes Lenksystem mit manueller oder automatischer Funktionsweise wie in den vorhergehenden Ansprüchen, **dadurch gekennzeichnet, dass** die entsprechenden äusseren Leitungen, in Abhängigkeit davon ob man im manuellen oder automatischen Funktionsmodus ist, als Leitungen zur Einspritzung in die jeweiligen Kammern oder als Leitungen für den Rücklauf des Öls von den entsprechenden Kammern aus, wirken.

## Revendications

1. Système de direction motorisé à fonctionnement manuel ou automatique, qui comprend un cylindre (1) dans lequel se déplace axialement un piston (2) à crémaillère (3) qui définit deux chambres (1') et (1''), piston qui est uni à une vis (6) à laquelle est couplée de manière fixe une tige tournante (8) sur l'arbre (9) correspondant et activée par le volant de direction du véhicule, comprenant, en outre, une vanne pilote (10) à travers laquelle un fluide hydraulique (huile) est injecté ou refoulé dans la chambre définie par le cylindre (1) ou dans la chambre qui loge le culbuteur (5), qui inclut un secteur denté (4) qui s'engrène sur la crémaillère (3) du piston (2), afin de déplacer le piston et faire que le pivot du culbuteur (5) et donc les roues du véhicule, se déplacent, **caractérisé en ce que** l'extrémité arrière de la vis (6) est pourvue d'une bague (11) avec une ramification radiale (12) qui permet, à travers quelques trous (13) réalisés dans le corps du cylindre (1), le passage d'huile à travers un conduit extérieur (14) de la vanne pilote (10) à la chambre (16) du culbuteur (5), la chambre (1'-1'') et la chambre (16) du culbuteur (5) étant alimentées indirectement et de l'extérieur respectivement à travers des connexions (23) et (15) communiquant directement avec la chambre (1') même du cylindre (1) et la chambre (16), dont les connexions (23) et (15) sont desservies par ledit conduit (14) et un conduit (21) uni à la vanne pilote (10) et aux conduits (22) et (19) qui communiquent directement avec le réservoir d'huile, toute cette huile étant appliquée à travers les conduits (14) ou (21) après être passée pour la première fois à travers la vanne pilote (10), permettant ainsi de contrôler la direction du véhicule en mode manuel lorsque le chauffeur agit sur le volant de direction du véhicule, alors que l'huile est appliquée à travers les conduits (19) ou (22) sans passer à travers la vanne pilote (10), le fonctionnement automatique s'établissant sans l'action du chauffeur, à l'aide du contrôle de cette application d'huile à travers un système de contrôle adéquat.

2. Système de direction motorisé à fonctionnement manuel ou automatique, comme dans la revendication 1, **caractérisé en ce que** les conduits extérieurs (14), (19), (21) et (22) sont munis du même nombre de vannes du sélecteur (18), (20), (24) et (25) qui sont contrôlées par le système de contrôle correspondant et qui ouvrent ou ferment le passage à travers les conducteurs correspondants pour permettre le fonctionnement du mode manuel avec l'huile qui passe pour la première fois dans les chambre à travers la vanne pilote (10) ou de permettre le mode de fonctionnement automatique, avec l'huile passant directement dans les chambres sans passer à travers la vanne pilote (10).

3. Système de direction motorisé à fonctionnement manuel ou automatique, comme dans les revendications précédentes, **caractérisé en ce que** selon que celle-ci est en mode de fonctionnement manuel ou automatique, les conduits extérieurs correspondants agissent comme conduits pour l'injection dans les chambres respectives ou comme conduits pour le retour de l'huile depuis les chambres correspondantes.
